# EUROPÄISCHE PATENTSCHRIFT

(11) **EP 2 926 990 B1**
(45) Veröffentlichungstag und Bekanntmachung des Hinweises auf die Patenterteilung: **26.02.2020**
(21) Anmeldenummer: 15000946.2
(22) Anmeldetag: 01.04.2015
(51) Int. Cl.: B32B 27/08, B32B 37/00, C09J 5/00, F16B 11/00

(54) **VERFAHREN ZUM BEREITSTELLEN VON ABSTANDSHALTERN**
METHOD FOR PROVIDING SPACERS
PROCÉDÉ DE MISE À DISPOSITION D'ENTRETOISES

(30) Priorität: 05.04.2014 DE 102014005146
(43) Veröffentlichungstag der Anmeldung: 07.10.2015
(73) Patentinhaber: Airbus Defence and Space GmbH, 81663 Ottobrunn (DE)
(72) Erfinder: Körwien, Thomas, 85635 Höhenkirchen (DE)
(74) Vertreter: Isarpatent

(56) Entgegenhaltungen:
- DE-A1- 10 242 895
- DE-A1- 19 737 966
- GB-A- 2 264 589

## Beschreibung

Die vorliegende Erfindung betrifft ein Verfahren zum Bereitstellen von Abstandshaltern auf einem zu verklebenden Bauteil und ein entsprechendes Bauteil. Die Abstandshalter oder Distanzelemente legen eine vorbestimmte Klebespaltdicke fest, die auch bei lokalen Überpressungen nicht unterschritten werden kann.

DE 197 37 966 A1 offenbart eine Klebeverbindung zwischen zwei Bauteilen mit einem aushärtbaren Kunststoff. Eines der Bauteile weist angeformte bzw. angeschraubte Distanzelemente auf, welche im Bereich einer Klebefläche am anderen Bauteil zur Anlage kommen und dabei einen Klebespalt mit einer vorbestimmten Klebespaltdicke ausbilden. Die Distanzelemente sind als Noppen vorgesehen, die im Vergleich zur Klebefläche punktförmig ausgebildet und im Klebespalt verteilt angeordnet sind.

Aufgabe der vorliegenden Erfindung ist das zur Verfügung stellen eines verbesserten Verfahrens zum Bereitstellen von Abstandshaltern auf einem zu verklebenden Bauteil, welches insbesondere die Abstandshalter mit weniger Aufwand bereitstellt.

Diese Aufgabe wird durch ein Verfahren zum Bereitstellen von Abstandshaltern auf einem zu verklebenden Bauteil und ein solches Bauteil gemäß den Merkmalen der unabhängigen Ansprüche gelöst. Vorteilhafte Ausführungsformen und Weiterbildungen sind den Unteransprüchen und der nachfolgenden Beschreibung zu entnehmen.

Das Verfahren zum Bereitstellen von Abstandshaltern auf einem zu verklebenden Bauteil umfasst die folgenden Schritte:
- Ein Flächengebilde wird auf das zu verklebende Bauteil aufgelegt. Das Flächengebilde weist Durchlässe auf.
- Eine aushärtbare Flüssigkeit wird in die Durchlässe des Flächengebildes eingebracht, sodass die Flüssigkeit nach einem Aushärten und einem Abziehen des Flächengebildes Abstandshalter auf dem zu verklebenden Bauteil bildet. Die Abstandshalter stellen bei einer Verklebung des Bauteils eine vorbestimmte Klebespaltdicke sicher.

In anderen Worten und als beispielhafte Ausführungsform: Es sind zwei Bauteile zu verkleben, wovon mindestens eines aus Faserverbundwerkstoff besteht, und wobei ein vorbestimmter Klebespalt eingehalten werden soll. Vor dem Aushärten der beiden Bauteile wird auf zumindest eines der Bauteile ein Flächengebilde aufgebracht. Das Flächengebilde kann eine Folie sein und weist Durchlässe bzw. Löcher auf. Es wird eine aushärtbare Flüssigkeit auf das Flächengebilde mit den Durchlässen aufgebracht und die Flüssigkeit dringt in die Durchlässe des Flächengebildes ein. Diese aushärtbare Flüssigkeit kann z.B. aus einem bereits mit Harz getränkten Prepreg kommen oder durch ein Infusionsverfahren eingebracht werden. Nach einem Aushärten der Flüssigkeit und einem Abziehen des Flächengebildes bleiben auf dem Bauteil Strukturen aus ausgehärteter Flüssigkeit übrig. Diese erhabenen Strukturen oder Stifte dienen bei der Verklebung des Bauteils mit einem anderen Bauteil als Abstandshalter und können so eine vorbestimmte Klebespaltdicke sicherstellen. Nach dem Abziehen des Flächengebildes kann ein Klebstoff aufgebracht, und die beiden Bauteile miteinander verklebt werden.

Das Verfahren gemäß der Erfindung kann bei der Verklebung von Bauteilen in der Fertigung, der Montage, der Wartung, der Reparatur usw. eingesetzt werden und verringert den Aufwand zur Bereitstellung von Abstandshaltern beträchtlich. Es stellt sicher, dass eine vorbestimmte Klebeschichtdicke erreicht, oder eine Mindestklebeschichtdicke nicht unterschritten wird. Es ist die Verwendung von konventionellen, nicht modifizierten Werkzeugen möglich. Es sind keine zusätzlichen Hilfsstoffe oder Distanzelemente in der Verklebung nötig. Es sind auch keine weiteren Werkzeuge und entsprechende Rüstzeiten notwendig.

Das Verfahren gemäß der Erfindung ist insbesondere bei der Verwendung von pastösen Klebstoffen geeignet, da die extrem aufwändige Positionierung von konventionellen Abstandshaltern in pastösen Klebstoffen unnötig wird. Weiterhin ist das Verfahren gemäß der Erfindung sehr gut kompatibel mit modernen Oberflächen(vor)behandungsmethoden und Fertigungsverfahren, wie z.B. Plasma- oder Laserverfahren.

Vorzugsweise kann das Flächengebilde mit der aushärtbaren oder bereits ausgehärteten Flüssigkeit bis unmittelbar vor der Verklebung mit dem zweiten Bauteil oder bis unmittelbar vor einer Oberflächenbehandlung auf dem ersten Bauteil verbleiben und so z.B. als Schutzfolie wirken.

Vorzugsweise kann auch eine Klebespaltmindestdicke sichergestellt werden.

Die Bauteile sind vorzugsweise aus Faserverbundwerkstoffen, Kunststoff oder ähnlichem.

Das Flächengebilde kann eine Folie, ein Gewebe, ein Gestrick, eine Gewirk oder ähnliches sein. Das Flächengebilde kann Fasern, bevorzugt Polymerfasern, und weiter bevorzugt Fluorpolymerfasern umfassen.

Die aushärtbare Flüssigkeit kann ein Epoxidharz, ein Kunststoff oder ähnliches sein. Die aushärtbare Flüssigkeit kann auch ein aushärtbarer Schaum sein.

Das Aushärten kann durch die Zeit, durch Temperatur, Gaseinwirkung oder ähnliches geschehen.

Die Abstandshalter können eine erhabene Struktur auf dem zu verklebenden Bauteil bilden. Die Durchlässe des Flächengebildes, die die Abstandshalter bilden werden, können bezüglich ihrer Form, Höhe, Größe, Dichte und/oder Verteilung bzgl. des Flächengebildes variabel sein. Die Querschnitte der Durchlässe können z.B. kreisförmig, kreuzförmig, oval, eckig, linienförmig und/oder sternförmig sein. Die Grund- und Stirnflächen der Durchlässe bzw. der Abstandshalter, die an den beiden zu verklebenden Bauteilen angrenzen werden, können dieselbe oder eine andere Grundfläche aufweisen. Das heißt, der Durchmesser oder Querschnitt eines Durchlasses bzw. Abstandshalters kann sich über seine Höhe verjüngen oder verbreitern. Der Durchlass bzw. Abstandshalter kann also eine Kegel-, Kegelstumpf-, Doppelkegel-, Pyramiden-, Schrauben- oder Sanduhrform oder ähnliches aufweisen. Die Form des Abstandshalters wird durch die Form des Durchlasses im Flächengebilde definiert. Die Durchlässe können über die Fläche des Flächengebildes gleichmäßig oder graduell verteilt sein. Auch ihre Form, Höhe, Größe, Dichte und/oder Verteilung kann über die Fläche des Flächengebildes hinweg gleichmäßig sein oder variieren. Das heißt, in einem Teil des Flächengebildes können anders geformte, höhere, größere, anders verteilte oder mehr Durchlässe vorhanden sein, als in einem anderen Teil des Flächengebildes.

Die Durchlässe können während der Herstellung des Flächengebildes in das Flächengebilde eingewirkt werden, d.h. während des Webens, Strickens, Wirkens usw. freigelassen bzw. umwebt, umstrickt oder umwirkt werden. Die Durchlässe können auch eingestanzt, eingebohrt, eingedrückt, z.B. durch einen Laser eingeschossen oder ähnliches werden oder schlicht bei der Herstellung des Flächengebildes freigelassen werden.

Die vorliegende Erfindung betrifft weiterhin ein Bauteil mit einem solchen Flächengebilde und Durchlässen.

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen gleiche Bezugszeichen für gleiche oder ähnliche Objekte.

Nachfolgend wird anhand der beigefügten Zeichnungen näher auf Ausführungsbeispiele der Erfindung eingegangen.
- **Fig. 1**: zeigt eine Draufsicht auf ein Flächengebilde in der Form einer Folie in einer schematischen Darstellung.
- **Fig. 2**: zeigt einen Querschnitt durch ein Bauteil mit aufgelegtem Flächengebilde in einer schematischen Darstellung.
- **Fig. 3**: zeigt ein Werkzeug und ein Bauteil mit Flächengebilde in einer schematischen Darstellung.
- **Fig. 4**: zeigt eine räumliche Ansicht des zu verklebende Bauteils mit Abstandshaltern in einer schematischen Darstellung.

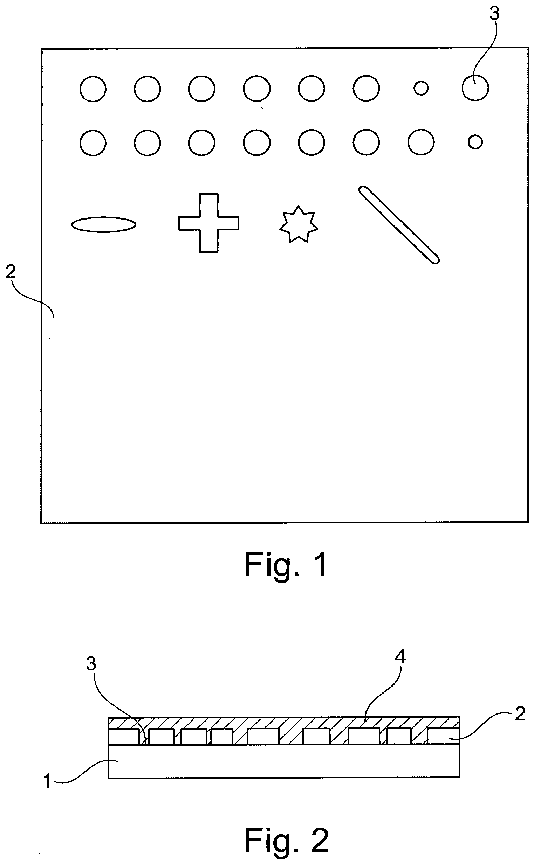

**Fig. 1** zeigt eine Draufsicht auf ein Flächengebilde 2 in der Form einer Folie in einer schematischen Darstellung. Beispielhaft sind verschiedene Formen von Durchgängen 3 bzw. Löchern gezeigt, z.B. kreisförmig, oval, kreuzförmig, sternförmig oder linienförmig. Die Durchgänge 3 weisen unterschiedliche Größen auf.

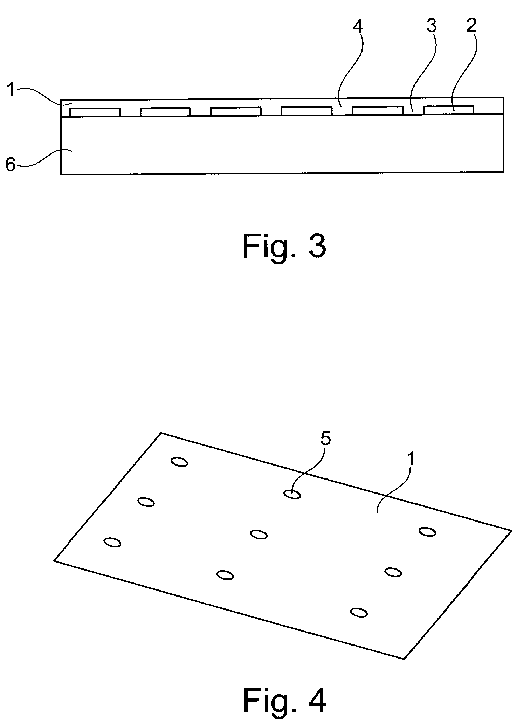

Das Flächengebilde 2 mit den Durchgängen 3 wird auf ein zu verklebendes Bauteil 1 (siehe Fig. 2) aufgelegt. Die Durchgänge 3 werden mit einer aushärtbaren Flüssigkeit 4 ausgegossen und das Flächengebilde 2 wieder von dem Bauteil 1 abgezogen. Die in den Durchgängen 3 erstarrte Flüssigkeit 4 bleibt alleine auf dem Bauteil 1 in Form von z.B. Stiften stehen. Diese Stifte bilden bei einer Verklebung des Bauteils 1 mit einem weiteren Bauteil Abstandshalter 5 (siehe Fig. 4), die eine vorbestimmte Klebespaltdicke sicherstellen oder das Unterschreiten einer vorbestimmten Klebespaltdicke auch bei lokalen Überpressungen verhindern.

Die Durchgänge 3 bzw. die späteren Abstandshalter 5 können bezüglich ihrer Form, Höhe, Größe, Dichte und/oder Verteilung einheitlich oder unterschiedlich über der Fläche des Flächengebildes 2 sein. Das heißt, es können auf demselben Flächengebilde 2 unterschiedliche Formen und Größen von Durchgängen 3 angeordnet sein. Auch ihre Dichte bzw. Verteilung kann über die Fläche des Flächengebildes 2 hinweg variieren oder gleichmäßig sein.

Die Dicke des Flächengebildes 2 kann zwischen 0,001 und 10 mm liegen, vorzugsweise zwischen 0,01 und 1 mm, weiter bevorzugt zwischen 0,1 und 0,3 mm.

Das Flächengebilde 2 kann eine Folie, ein Gewebe, ein Gestrick, eine Gewirk oder ähnliches sein. Das Flächengebilde 2 kann Fasern, bevorzugt Polymerfasern, und weiter bevorzugt Fluorpolymerfasern umfassen.

Der Durchmesser bzw. Querschnitt eines Durchgangs 3 bzw. Lochs kann zwischen 0,1 und 5 mm liegen, vorzugsweise zwischen 0,2 und 3 mm, weiter bevorzugt zwischen 1 und 2 mm.

Die aushärtbare Flüssigkeit kann ein Epoxidharz, ein Kunststoff oder ähnliches sein.

Die zu verklebenden Bauteile 1 sind vorzugsweise aus Faserverbund- oder Kunststoffwerkstoffen oder ähnlichem.

**Fig. 2** zeigt einen Querschnitt durch das Bauteil 1 mit aufgelegtem Flächengebilde 2 in einer schematischen Darstellung. Das Flächengebilde 2 weist Durchlässe 3 bzw. Löcher auf. Die Durchlässe 3 sind ungleichmäßig über das Flächengebilde 2 verteilt. Die Durchlässe 3 sind unterschiedlich groß bzw. breit.

Die Durchgänge 3 werden mit einer aushärtbaren Flüssigkeit 4 ausgegossen, die meist bündig mit dem Flächengebilde 2 abschließt, hier aber (auch aus illustrativen Zwecken) über das Flächengebilde 2 hinausgeht und es bedeckt.

Die Durchlässe 3 können während der Herstellung des Flächengebildes 2 in das Flächengebilde 2 eingewirkt werden, d.h. während des Webens, Strickens, Wirkens usw. freigelassen bzw. umwebt, umstrickt oder umwirkt werden. Die Durchlässe 3 können auch eingestanzt, eingebohrt, eingedrückt, z.B. durch einen Laser eingeschossen oder ähnliches werden oder schlicht bei der Herstellung des Flächengebildes 2 freigelassen werden.

Wird das Bauteil 1 mit einem weiteren Bauteil (nicht gezeigt) verklebt, so kann auch das weitere Bauteil auf dieselbe Weise mit Abstandshaltern 5 versehen worden sein. Die Abstandshalter 5 können beim Verkleben miteinander fluchten oder zueinander versetzt sein.

Das Verfahren gemäß der Erfindung kann bei der Verklebung von Bauteilen 1 in der Fertigung, der Montage, der Wartung, der Reparatur usw. eingesetzt werden.

**Fig. 3** zeigt ein Werkzeug 6 in einer schematischen Darstellung, welches eine Kontur des zu verklebenden Bauteils 1 festlegt. Hier ist es gerade, es kann aber auch geschwungen oder anders geformt sein. Das Werkzeug 6 kann z.B. von einem ausgeschliffenen Schaden in einer Komponente eines Flugzeugs abgeformt worden sein. Auf das Werkzeug 6 wird das zu verklebende Bauteil 1 z.B. in der Form eines Laminats mit dem Flächengebilde 2 z.B. in der Form einer Abziehfolie und den Durchlässen 3 aufgelegt und überträgt so seine Kontur. Die aushärtbare Flüssigkeit 4 wird eingegossen und erstarrt in den Durchlässen 3. Das zu verklebende Bauteil 1 mit dem Flächengebilde 2 und der ausgehärteten Flüssigkeit 4 wird von dem Werkzeug 6 abgenommen, das Flächengebilde 2 abgezogen und das Bauteil 1 mit den so aus der ausgehärteten Flüssigkeit 4 gebildeten Abstandshaltern 5 (siehe Fig. 4) an die Stelle des ausgeschliffenen Schadens in der Flugzeugkomponente geklebt.

Vorzugsweise kann das Flächengebilde 2 mit der aushärtbaren oder bereits ausgehärteten Flüssigkeit 4 auch bis unmittelbar vor der Verklebung mit dem zweiten Bauteil oder bis unmittelbar vor einer Oberflächenbehandlung auf dem ersten Bauteil 1 verbleiben und so z.B. als Schutzschicht wirken.

**Fig. 4** zeigt eine räumliche Ansicht des zu verklebende Bauteils 1 mit Abstandshaltern 5 in einer schematischen Darstellung. Die Abstandshalter 5 haben hier die Form von Noppen und sind kreisförmig und gleichmäßig in Reihen über das Bauteil verteilt. Die Noppen können eine vorbestimmte Klebespaltdicke oder Klebespaltmindestdicke sicherstellen.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Ein Verfahren zum Bereitstellen von Abstandshaltern (5) auf einem zu verklebenden Bauteil (1), umfassend die folgenden Schritte:
- Auflegen eines Flächengebildes (2) auf das zu verklebende Bauteil (1), wobei das Flächengebilde (2) Durchlässe (3) aufweist, und
- Einbringen einer aushärtbaren Flüssigkeit (4) in die Durchlässe (3) des Flächengebildes (2), sodass die Flüssigkeit (4) nach einem Aushärten und einem Abziehen des Flächengebildes (2) Abstandshalter (5) auf dem zu verklebenden Bauteil (1) bildet, die bei einer Verklebung des Bauteils (1) eine vorbestimmte Klebespaltdicke sicherstellen.

2. Verfahren nach Anspruch 1, weiter umfassend ein Abziehen des Flächengebildes (2).

3. Verfahren nach Anspruch 1, wobei das Flächengebilde (2) eine Folie, ein Gewebe, ein Gestrick, eine Gewirk oder ähnliches ist.

4. Verfahren nach einem der vorherigen Ansprüche, wobei die Abstandshalter (5) eine Klebespaltmindestdicke sicherstellen.

5. Verfahren nach einem der vorherigen Ansprüche, wobei die Abstandshalter (5) eine erhabene Struktur auf dem zu verklebenden Bauteil (1) bilden.

6. Verfahren nach einem der vorherigen Ansprüche, wobei die Durchlässe (3) im Flächengebilde (2) bezüglich ihrer Form, Höhe, Größe und/oder Verteilung variabel sind.

7. Verfahren nach einem der vorherigen Ansprüche, wobei die Durchlässe (3) im Querschnitt kreisförmig, oval, kreuzförmig, eckig, linienförmig und/oder sternförmig sind.

8. Verfahren nach einem der vorherigen Ansprüche, wobei das Flächengebilde (2) Fasern, bevorzugt Polymerfasern, und weiter bevorzugt Fluorpolymerfasern umfasst.

9. Verfahren nach einem der vorherigen Ansprüche, wobei die Durchlässe (3) während der Herstellung des Flächengebildes (2) in das Flächengebilde (2) eingewirkt oder während eines Stanzprozess in das Flächengebilde (2) eingebracht werden.

## Claims

1. Method for providing spacers (5) on a component (1) to be adhesively bonded, comprising the following steps:
- applying a sheetlike structure (2) to the component (1) to be adhesively bonded, wherein the sheetlike structure (2) has passages (3), and
- introducing a curable liquid (4) into the passages (3) of the sheetlike structure (2), such that the liquid (4), after curing, and after a removal of the sheetlike structure (2), forms spacers (5) on the component (1) to be adhesively bonded, which ensure a predetermined adhesive gap thickness when the component (1) is adhesively bonded.

2. Method according to Claim 1, further comprising removal of the sheetlike structure (2).

3. Method according to Claim 1, wherein the sheetlike structure (2) is a film, a woven fabric, a weft-knitted fabric, a warp-knitted fabric or the like.

4. Method according to one of the preceding claims, wherein the spacers (5) ensure a minimum adhesive gap thickness.

5. Method according to one of the preceding claims, wherein the spacers (5) form a raised structure on the component (1) to be adhesively bonded.

6. Method according to one of the preceding claims, wherein the passages (3) in the sheetlike structure (2) are variable in terms of their shape, height, size and/or distribution.

7. Method according to one of the preceding claims, wherein the passages (3) are circular, oval, cross-shaped, polygonal, linear and/or star-shaped in cross section.

8. Method according to one of the preceding claims, wherein the sheetlike structure (2) comprises fibres, preferably polymer fibres, and further preferably fluoropolymer fibres.

9. Method according to one of the preceding claims, wherein the passages (3) are worked into the sheetlike structure (2) in the production of the sheetlike structure (2) or are introduced into the sheetlike structure (2) in a punching process.

## Revendications

1. Procédé de préparation d'espaceurs (5) sur un composant à coller (1), comprenant les étapes suivantes :
- la pose d'une structure plate (2) sur le composant à coller (1), la structure plate (2) comprenant des passages (3), et
- l'introduction d'un liquide durcissable (4) dans les passages (3) de la structure plate (2), de telle sorte que le liquide (4) forme après un durcissement et un retrait de la structure plate (2) des espaceurs (5) sur le composant à coller (1), qui assurent une épaisseur de fente de collage prédéterminée lors d'un collage du composant (1).

2. Procédé selon la revendication 1, comprenant en outre un retrait de la structure plate (2).

3. Procédé selon la revendication 1, dans lequel la structure plate (2) est un film, un tissu, un tricot ou analogue.

4. Procédé selon l'une quelconque des revendications précédentes, dans lequel les espaceurs (5) assurent une épaisseur minimale de la fente de collage.

5. Procédé selon l'une quelconque des revendications précédentes, dans lequel les espaceurs (5) forment une structure en relief sur le composant à coller (1).

6. Procédé selon l'une quelconque des revendications précédentes, dans lequel les passages (3) dans la structure plate (2) sont variables au regard de leur forme, de leur hauteur, de leur taille et/ou de leur répartition.

7. Procédé selon l'une quelconque des revendications précédentes, dans lequel les passages (3) sont de section transversale circulaire, ovale, en croix, angulaire, linéaire et/ou en étoile.

8. Procédé selon l'une quelconque des revendications précédentes, dans lequel la structure plate (2) comprend des fibres, de préférence des fibres de polymères, et de manière davantage préférée des fibres de polymères fluorés.

9. Procédé selon l'une quelconque des revendications précédentes, dans lequel les passages (3) sont réalisés dans la structure plate (2) pendant la fabrication de la structure plate (2) ou sont introduits dans la structure plate (2) pendant un procédé de poinçonnage.
